# EUROPÄISCHE PATENTSCHRIFT

(11) **EP 1 512 960 B1**
(45) Veröffentlichungstag und Bekanntmachung des Hinweises auf die Patenterteilung: **21.06.2006**
(21) Anmeldenummer: 04018163.8
(22) Anmeldetag: 30.07.2004
(51) Int. Cl.: G01N 21/35, B01D 3/42

(54) **Spektroskopische Konzentrationsbestimmung in einer Rektifikationskolonne**
Spectroscopic determination of concentration in a rectifying column
Détermination spectroscopique de concentration dans une colonne de rectification

(30) Priorität: 11.08.2003 DE 10336875
(43) Veröffentlichungstag der Anmeldung: 09.03.2005
(73) Patentinhaber: LANXESS Deutschland GmbH, 51369 Leverkusen (DE)
(72) Erfinder: Hauschild, Thorsten, Dr., 51469 Bergisch Gladbach (DE); Gerlach, Martin, Dr., 41539 Dormagen (DE); Tosch, Stephan, Dr., 45549 Sprockhövel (DE); Frisch, Burkhard, 51377 Leverkusen (DE); Mohr, Bernd, 51377 Leverkusen (DE)

(56) Entgegenhaltungen:
- WO-A-96/10009
- WO-A-98/29787
- US-A- 3 085 153
- US-A- 3 325 377

## Beschreibung

Die vorliegende Erfindung betrifft ein Verfahren zur Konzentrationsbestimmung in einer Rektifikationkolonne mittels IR-Spektroskopie.

Zur Herstellung von Produkten mit handelsüblicher Reinheit ist es von großer Bedeutung, geeignete Analyseverfahren bereitzustellen, welche möglichst frühzeitig in den Aufreinigungsprozess eingreifen können und somit eine frühe Erkennung von Störungen in der Prozessführung ermöglichen.

Dazu ist es erforderlich, bereits innerhalb der Rektifikationskolonne, im Folgenden auch als Kolonne bezeichnet, eine analytische Reinheitsüberprüfung mittels eines geeigneten Analyseverfahrens vornehmen zu können. Eine Möglichkeit bietet hier die Bestimmung der Konzentration der zu reinigenden Substanz und ihrer Verunreinigungen, beispielsweise mittels on-line-Gaschromatographie, Raman-, Infrarot- (IR) oder NMR-Spektroskopie.

Die Konzentrationsbestimmung in einer Kolonne ist bekannt. Weit verbreitet sind sogenannte on-line-Gaschromatographen, welche in der Regel mittels Fördereinrichtungen Proben aus den Kolonnen (z.B. Vakuumkolonnen) entnehmen und zur gaschromatographischen Analyse führen. Die Analysenzeit ist in der Regel abhängig vom Totvolumen der Probenahmestrecke und von der Retentionszeit der beteiligten Substanzen (Henry Z. Kister, Distillation Operation, 1990, McGraw-Hill, pages 568-575).

Die Anwendung der IR-Spektroskopie als Konzentrationsbestimmung im Entnahmestrom einer Kolonne ist ebenfalls bekannt (WO 98/29787 Al). Allerdings wirkt sich bei diesem Verfahren nachteilig aus, dass durch die Analyse im Entnahmestrom, wo in der Regel bereits die spezifizierte Produktqualität gefordert ist, eine Abweichung erst im Endprodukt des Reinigungsprozesses erkannt wird und somit gegebenenfalls ein Fehler in der Prozessführung erst sehr spät behoben werden kann. Dadurch liegt bei einer erkannten Abweichung eine erhebliche Menge von gereinigten Produkten außerhalb des vorgesehenen Spezifikationsbereiches.

Ferner sind die Analysen oft auf hohem Konzentrationsniveau, d. h. Konzentrationswerten mit Gehalten von mehr als 99 Gew.-%, auszuführen, so dass oft die für eine Regelung erforderliche Analysengenauigkeit nicht erreicht wird.

Um diesen Nachteilen entgegenzuwirken, bietet sich eine Konzentrationsbestimmung bereits innerhalb der Kolonne an, welche in einem sicheren Abstand zur geforderten Spezifikation und bei einfacher zu bestimmenden Konzentrationsniveaus durchgeführt werden kann, jedoch im allgemeinen eine aufwendige Regeltechnik unter Verwendung zusätzlicher Förderaggregate erfordert.

Eine weitere Schwierigkeit, mit der man im allgemeinen bei der Positionierung einer Analysensonde zur Konzentrationsbestimmung innerhalb einer Kolonne konfrontiert wird, ist die Vergiftung des Systems bei kontinuierlicher Probenentnahme und anschließender Wiedereinspeisung in die Kolonne.

Für eine erfolgreiche, d.h. gezielte und schnelle, Reaktion auf erkannte Abweichungen ist zudem eine hohe Taktfrequenz der Konzentrationsbestimmung und somit auch der Probenentnahme, eine schnelle Ermittlung der Analysenergebnisse sowie eine gleichfalls mit hoher Taktfrequenz erfolgende Weiterleitung dieser Analysenwerte an ein Prozessleitsystem erforderlich, welches die Prozessführung und Regelung steuert.

WO 98/29787 A1 beschreibt eine Methode zur On-line-Kontrolle verfahrenstechnischer Produktionsprozesse unter Verwendung spektroskopischer Methoden mit Betonung auf die Anwendung der NIR-Spektroskopie ("Near Infrared Spektroskopie"). Allerdings wird dabei weder auf die Positionierung der spektroskopischen Analysensonden noch auf die Behebung der vorangehend beschriebenen Nachteile eingegangen, da vielmehr die On-line-Methode an sich im Vordergrund steht.

Die US 3 085 153 A offenbart ein Verfahren zur Bestimmung der Konzentration eines Stoffes in einer Rektifikationkolonne mittels IR-Spektroskopie, wobei eine Probe kontinuierlich aus dem oberen Bereich der Kolonne entnommen und durch einen IR-Analysator geleitet wird.

Die Aufgabe der vorliegenden Erfindung bestand darin, ein einfaches Verfahren zur spektroskopischen Konzentrationsbestimmung in einer Rektifikationskolonne bereitzustellen, welches vorangehend beschriebene Nachteile nicht mehr aufweist.

Gegenstand der vorliegenden Erfindung ist ein Verfahren zur spektroskopischen Konzentrationsbestimmung eines Stoffes in einer Rektifikationskolonne, dadurch gekennzeichnet, dass
1) die Konzentration des Stoffes mittels IR-Spektroskopie bestimmt wird,
2) eine Probenschleife in einer bestimmten Höhe Hₒ aus der Rektifikationskolonne herausgeführt und in einer Höhe Hᵤ unterhalb der Ausführung wieder in die Rektifikationskolonne eingeführt wird, wodurch eine Höhendifferenz ΔH entsteht,
3) die Probennahme hydrostatisch geregelt ist und über die Probenschleife erfolgt, indem sich in der Probenschleife ein hydrostatisches Druckniveau aufbaut, welches höher als der Druckverlust in den gemäß der Höhendifferenz ΔH betroffenen Einbauten des Kolonnenabschnittes ist, und
4) von der Probenschleife eine Analysenleitung (Bypass-Leitung) abgezweigt und wieder in die Probenschleife zurückgeführt wird, welche die zu analysierende Flüssigkeit an einer IR-Analysensonde vorbeileitet.

Bevorzugt ist dies ein Verfahren, dadurch gekennzeichnet, dass die Rektifikationskolonne im Unterdruckbereich betrieben wird.

Besonders bevorzugt ist dies ein Verfahren, dadurch gekennzeichnet, dass die Konzentration mittels NIR-Spektroskopie bestimmt wird.

Überraschend zeigt das erfindungsgemäße Verfahren die einleitend aufgeführten Nachteile nicht.

An der Kolonne wurde eine rein nach hydrostatischen Gesichtspunkten ausgelegte Probenschleife installiert. An der Unterkante eines Packungsbettes der Kolonne, d.h. in dem dort installierten Flüssigkeitssammler, setzt die Probenschleife an. Die Flüssigkeit wird aus der Kolonne herausgeführt und kann mittels eines Entgasungsstutzens in das Fallrohr gelangen, ohne dass Gasblasen im größeren Umfang mitgezogen werden. Die Probenschleife wird nach einigen Metern Höheverlust ΔH) wieder in die Kolonne eingeführt. Dies ist möglich, da sich über der Probenschleife ein hydrostatisches Druckniveau aufbaut, welches höher als der Druckverlust der betroffenen Kolonnensektion ist. Durch die optimale Abstimmung von Höhendifferenz, bevorzugt ca. 3 bis 7 m, hydrostatischem Druck aus der Höhendifferenz abzüglich des Druckverlustes aus der Probenschleife, bevorzugt ca. 0,1 bis 0,4 bar und Druckverlust innerhalb der betroffenen Kolonnensektion, bevorzugt ca. 0,01 bis 0,2 bar, ist die einfache kontinuierliche Probenentnahme und Wiedereinspeisung ohne zusätzliche Förderaggregate möglich.

Ferner kann die Flüssigkeit wieder in die Kolonne eingeführt werden, da die Flüssigkeitsmengen im Vergleich zu den intern in der Kolonne fließenden Mengen klein sind und folglich eine Produktkontamination, d.h. eine sogenannte "Vergiftung" des Systems, nicht zu befürchten ist. Ein weiteres Segment an Packungen unterhalb dieser Einlaufstelle schützt die Produktqualität zusätzlich.

Von der o.g. Probenschleife wird eine Bypass-Leitung (Analysenleitung) abgezweigt, welche die Flüssigkeit an einer IR-Analysensonde vorbeiführt. Diese Sonde beinhaltet bevorzugt in sich eine Entgasungsschleife und ist auf hohe Temperaturen ausgelegt. Aus der Analysenleitung können auch Kalibrierproben gezogen werden. Die Entgasungsschleife ist Bestandteil des Sondenblocks. Vor der Optik der Analysensonde, der Erfassung des Konzentrationssignals, wird ggf. in der Probenflüssigkeit enthaltenen Gasblasen die Möglichkeit der Entgasung aus der Flüssigkeit gegeben, indem eine Bypass-Leitung an der Optik vorbeigeführt wird.

Eine bevorzugte Ausführungsform des erfindungsgemäßen Verfahrens ist somit dadurch gekennzeichnet, dass die Analysenleitung
1) eine Entgasungsschleife beinhaltet,
2) auf Temperaturen von 0°C bis 180°C, bevorzugt 60°C bis 180°C, besonders bevorzugt 100°C bis 180°C, ausgelegt ist,
3) beheizt werden kann und
4) aus der Analysenleitung Kalibrierproben gezogen werden können.

Die beschriebene Konstellation ist in der Lage, mit einer einminütigen Frequenz die Konzentrationsbestimmung durchzuführen. Da an dieser Stelle des Konzentrationsprofils der Kolonne noch nicht die hohe Endreinheit des Produktes gefordert ist, ist auch die erreichte Analysengenauigkeit von 0,1 % ausreichend, um ein verwertbares Steuersignal für eine Online-Regelung zu erhalten. Durch die frühzeitige Erkennung von Abweichungen kann eine implizite Verstärkung der Störungserkennung um einen Faktor 10 und mehr entstehen und zur Steuerung der Prozessführung in der Kolonne genutzt werden.

Die Verweilzeit der Flüssigkeit in der Analysenleitung, im Folgenden auch als Bypass-Leitung bezeichnet, bis zur IR-Sonde ist soweit minimiert, dass die Fortpflanzungszeit einer an der IR-Sonde erkannten Abweichung bzw. Störung innerhalb der Kolonne kleiner als die erforderliche Eingriffszeit des installierten Kolonnen-Regelkreises ist.

Zur Kalibration ist in der Analysenleitung (Bypass-Leitung) die Möglichkeit installiert eine repräsentative Referenzprobe zu entnehmen. Zur Kalibration wird eine Anzahl von mindestens 40 Referenzproben benötigt. Die stoffliche Zusammensetzung der Proben wird mittels einer Referenzanalytik im Labor ermittelt. Die Analysenwerte werden jeweils einem Spektrum zugeordnet und mittels chemometrischer Auswerteverfahren (Multivariate Kalibration) wird eine Korrelation zwischen den Spektren und der stofflichen Zusammensetzung der Proben hergestellt. Das Resultat ist ein chemometrisches Kalibrationsmodell. Chemometrische Auswerteverfahren sind ein mathematischer Algorithmus, mit welchem die Änderung aufgenommener IR-Spektren in Korrelation zu einer Konzentrationsänderung gebracht werden. Diese Auswerteverfahren sind nicht-trivial, jedoch seit Einführung leistungsfähiger Kleinrechner auch dezentral ausführbar (Harald Martens, Tormod Naes, Multivariante Calibration, 1997, John Wiley & Sons).

Mittels des chemometrischen Kalibrationsmodells wird für die aus dem Probenstrom der Analysenleitung gemessenen IR-Spektren die stoffliche Zusammensetzung der zu analysierenden Probe errechnet. Das Analysenergebnis kann entweder als 4 bis 20 mA-Signal oder digital übermittelt werden.

Das erfindungsgemäße Verfahren kann in verschiedenen Ausführungsformen von Rektifikationskolonnen, z.B. Bodenkolonnen oder Packungskolonnen, durchgeführt werden. Entscheidend ist die Abstimmung der verwendeten geodätischen Höhendifferenz, des Druckverlustes über die Analysenschleife und des Druckverlustes über die überstrichene Sektion der Rektifikationskolonne. Bevorzugt wird das erfindungsgemäße Verfahren in Packungskolonnen durchgeführt.

Unter anderem ermöglicht der geringe Druckverlust der IR-Sonden, insbesondere der NIR-Sonden, eine sehr einfache Installation unter Vakuumbedingungen, denn die Probenschleife kann im trenntechnisch vertretbaren Rahmen ausgeführt werden. Trenntechnisch vertretbarer Rahmen heißt, dass keine Cross-Kontamination auftritt, und dass eine Konzentrationsverschiebung innerhalb der Rektifikationskolonne derart schnell erkannt wird, dass frühzeitig mittels manuellen oder automatischen Eingriffen, bevorzugt automatischen Eingriffen, die Ausführung der Trennaufgabe weiterhin am optimalen Betriebspunkt bleibt. In der technischen Installation werden ferner keine Dosier- oder Förderpumpen benötigt.

Mit dem erfindungsgemäßen Verfahren können Stoffgemische getrennt bzw. Stoffe von unerwünschten Verunreinigungen befreit werden. Bei den Stoffen kann es sich um organische oder anorganische Verbindungen handeln, die einen für eine Rektifikation geeigneten Siedepunkt aufweisen. Bevorzugt sind einzelne Isomere bzw. Isomerengemische organischer Verbindungen, Oligo- bzw. Polymere, azeotrope Mischungen etc. Besonders geeignete Stoffe sind z.B. die verschiedenen Nitrotoluole, Chlornitrobenzole und Chlortoluole. Unter Verunreinigungen werden alle Substanzen verstanden, welche den Stoffen gemäß deren Spezifikation nicht oder nicht in höherer als der spezifizierten Konzentration beigemischt sein sollen.

### Beispiel

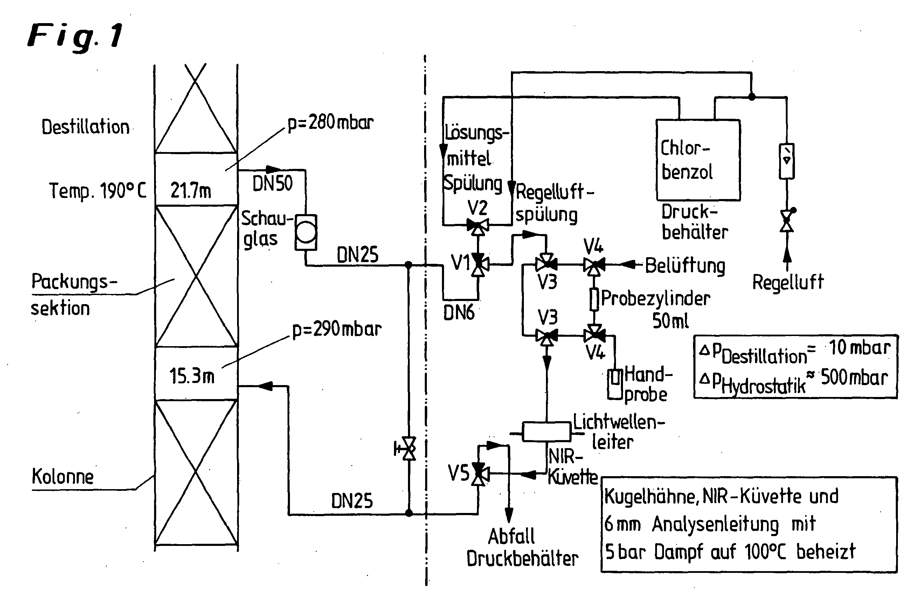

Das erfindungsgemäße Verfahren wird an einer Rektifikationskolonne der Chlornitrobenzol-Isomerentrennung erläutert (siehe Abbildung 1).

Die Probenschleife setzt in der Kolonne in einer geodätischen Höhe von ca. 21,7 m an. Der Kolonneninnendruck an dieser Position liegt bei ca. 280 mbar. Ein DN50 Rohr (DN: Maßangabe Durchmesser gemäß Deutscher Industrienorm) führt vom Flüssigkeitssammler abwärts in eine DN25 Probenschleife, die auf einer geodätischen Höhe von ca. 15,3 m wieder in die Rektifikationskolonne mündet. In der Kolonne herrscht an dieser Einmündung ein Kolonneninnendruck von ca. 290 mbar. Der Druckdifferenz in der Kolonne, bedingt durch die hier benutzten Kolonneneinbauten einer Packungssektion, steht eine geodätische Höhendifferenz von ca. 6,4 m zur Verfügung. Diese geodätische Höhendifferenz, abzüglich der 10 mbar Druckanstieg in der Kolonne, kann in der Probenschleife genutzt werden, um die Flüssigkeit an der NIR-Sonde vorbeizuführen.

Die Probenschleife verzweigt aus dem DN25 Querschnitt in eine DN6-Bypass-Leitung (Analysenleitung). Die Querschnittsminderung wurde gewählt, um den Holdup, d.h. dem in dem betrachteten Abschnitt vorgehaltenen Flüssigkeitsvolumen, in der gesamten Probenahmevorrichtung möglichst klein zu halten. Der Bypass ist mit Armaturen und Anschlüssen ausgestattet, um den Bereich mit Lösemittel (z.B. Chlorbenzol) zu spülen, oder aber auch um Referenzproben unmittelbar im Bereich der NIR-Sonde als Handprobe zu entnehmen. Die NIR-Küvette mit Lichtwellenleiteranschluss befindet sich gleichfalls in diesem DN6-Bypass-System. Der Lichtwellenleiter überträgt das Signal vom Küvetteneinbauort zur Auswerteinheit des NIR-Signals.

Die DN6-Bypass-Leitung wird im Bedarfsfall, z.B. zu Spülungszwecken, über Kugelhähne entleert und mit Lösungsmitteln automatisch gespült. Des weiteren können dadurch Leerspektren aufgenommen werden.

Das NIR-Spektrometer steht dazu in einem Raum ausserhalb der Explosionsschutzzone, die in vielen Produktionsstätten chemischer oder petrochemischer Anlagen vorgeschrieben ist.

Als Ergebnis der beschriebenen Versuchseinrichtung werden für das Konzentrationsniveau des betrachteten Einbauortes Konzentrationswerte von 97 Gew.-% Chlornitrobenzol-Isomer mit einer Genauigkeit von ca. 0,1 % erreicht.

## Patentansprüche

1. Verfahren zur spektroskopischen Konzentrationsbestimmung eines Stoffes in einer Rektifikationskolonne mittels IR-Spektroskopie **dadurch gekennzeichnet, dass**
1) eine Probenschleife in einer bestimmten Höhe Hₒ aus der Rektifikationskolonne herausgeführt und in einer Höhe Hᵤ unterhalb der Ausführung wieder in die Rektifikationskolonne eingeführt wird, wodurch eine Höhendifferenz ΔH entsteht,
2) die Probennahme hydrostatisch geregelt ist und über die Probenschleife erfolgt, indem sich in der Probenschleife ein hydrostatisches Druckniveau aufbaut, welches höher als der Druckverlust in den gemäß der Höhendifferenz ΔH betroffenen Einbauten des Kolonnenabschnittes ist, und
3) von der Probenschleife eine Analysenleitung (Bypass-Leitung) abgezweigt und wieder in die Probenschleife zurückgeführt wird, welche die zu analysierende Flüssigkeit an einer IR-Analysensonde vorbeileitet.

2. Verfahren nach Anspruch 1, **dadurch gekennzeichnet, dass** die Rektifikationskolonne im Unterdruckbereich betrieben wird.

3. Verfahren nach Anspruch 1 oder 2, **dadurch gekennzeichnet, dass** die Konzentration mittels NIR-Spektroskopie bestimmt wird.

4. Verfahren nach wenigstens einem der Ansprüche 1 bis 3, **dadurch gekennzeichnet, dass** die Analysenleitung
1) eine Entgasungsschleife beinhaltet,
2) auf Temperaturen von 0°C bis 180°C ausgelegt ist,
3) beheizt werden kann und
4) aus der Analysenleitung Kalibrierproben gezogen werden können.

## Claims

1. Method for spectroscopically determining the concentration of a substance in a rectification column by means of IR spectroscopy, **characterized in that**
1) a sample loop is conducted out of the rectification column at a certain height Hₒ and introduced back into the rectification column below the outlet at a height Hᵤ, resulting in a height differential ΔH,
2) the sample is taken under hydrostatic control and via the sample loop by building up a hydrostatic pressure level in the sample loop which is higher than the pressure drop in the column section relevant to the height differential ΔH, and
3) an analysis line (bypass line) branches off from the sample loop and is conducted back into the sample loop, and conducts the liquid to be analysed past an IR analysis probe.

2. Method according to Claim 1, **characterized in that** the rectification column is operated in the reduced pressure range.

3. Method according to Claim 1 or 2, **characterized in that** the concentration is determined by means of NIR spectroscopy.

4. Method according to at least one of Claims 1 to 3, **characterized in that** the analysis line
1) includes a degassing loop,
2) is designed for temperatures of from 0°C to 180°C,
3) can be heated and
4) calibration samples can be taken from the analysis line.

## Revendications

1. Procédé de détermination spectroscopique par spectroscopie dans l'IR de la concentration d'une substance dans une colonne de rectification, **caractérisé en ce que** :
1) une boucle d'échantillon est extraite à une hauteur Hₒ définie de la colonne de rectification et est réinjectée dans la colonne de rectification à une hauteur Hᵤ située plus bas que l'extraction, ce qui fait apparaître une différence de hauteur ΔH,
2) le prélèvement d'échantillon est régulé hydrostatiquement et s'effectue dans la boucle d'échantillon par le fait qu'un niveau de pression hydrostatique qui s'établit dans la boucle d'échantillon est plus élevé que la perte de charge dans les garnitures de la partie de la colonne qui correspond à la différence de hauteur ΔH et
3) un conduit d'analyse (conduit de dérivation) est dérivé de la boucle d'échantillon et retourne dans la boucle d'échantillon en amenant le liquide à analyser devant une sonde d'analyse IR.

2. Procédé selon la revendication 1, **caractérisé en ce que** l'on fait travailler la colonne de rectification dans la plage de dépression.

3. Procédé selon les revendications 1 ou 2, **caractérisé en ce que** la concentration est déterminée par spectroscopie NIR.

4. Procédé selon au moins l'une des revendications 1 à 3, **caractérisé en ce que** le conduit pour analyse :
1) contient une boucle de dégazage,
2) est conçu pour des températures de 0°C à 180°C,
3) peut être chauffé et
4) des échantillons d'étalonnage peuvent être extraits du conduit pour analyse.
